(19) Europäisches Patentamt
European Patent Office
Office européen des brevets

(11) Veröffentlichungsnummer : **0 363 316 B1**

# (12) EUROPÄISCHE PATENTSCHRIFT

(45) Veröffentlichungstag der Patentschrift :
**16.12.92 Patentblatt 92/51**

(51) Int. Cl.$^5$ : **A01N 43/88,** B27K 3/34

(21) Anmeldenummer : **89810717.2**

(22) Anmeldetag : **21.09.89**

## (54) Biocide für den Materialschutz und für Wassersysteme.

Die Akte enthält technische Angaben, die nach dem Eingang der Anmeldung eingereicht wurden und die nicht in dieser Patentschrift enthalten sind.

(30) Priorität : **30.09.88 CH 3636/88**

(43) Veröffentlichungstag der Anmeldung :
**11.04.90 Patentblatt 90/15**

(45) Bekanntmachung des Hinweises auf die Patenterteilung :
**16.12.92 Patentblatt 92/51**

(84) Benannte Vertragsstaaten :
**BE CH DE ES FR GB IT LI NL SE**

(56) Entgegenhaltungen :
**GB-A- 1 577 055**
**US-A- 4 097 594**

(73) Patentinhaber : **CIBA-GEIGY AG**
**Klybeckstrasse 141**
**CH-4002 Basel (CH)**

(72) Erfinder : **Lorenz, Joachim, Dr.**
**Im Tiefen Weg 17**
**W-6140 Bensheim 3 (DE)**
Erfinder : **Grade, Reinhardt, Dr.**
**Tulpenweg 11**
**W-6140 Bensheim 3 (DE)**
Erfinder : **Riebli, Peter**
**Bünten 17**
**CH-4446 Buckten (CH)**

EP 0 363 316 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Biocide für den Materialschutz und für Wassersysteme

Die vorliegende Erfindung betrifft die Verwendung von 3,5-Dihalogeno-1,2,6-thiadiazin-4-onen, insbesondere von 3,5-Dichlor-1,2,6-thiadiazin-4-on, als Biozide im Materialschutz und in Wassersystemen, Verfahren zum Schützen dieser Materialien und Systeme vor Schadorganismen und diese Materialien und Systeme, enthaltend die vorstehend definierten Thiadiazinonderivate.

3,5-Dichlor-1,2,6-thiadiazin-4-on und ein Verfahren zu dessen Herstellung ist in Recl. Trav. Chim. Pays Bas 93, 270 (1974) beschrieben. Die US-A4 097,594 lehrt, dass diese Verbindung sowie 3-Chlor-1,2,6-thiadiazinone, die jedoch in 5-Stellung an Stelle des Chloratoms andere Substituenten tragen, zur Bekämpfung von pflanzenpathogenen Pilzen einsetzbar sind. Die US-A 4,497,807, 4,143,138 und 4,201,780 beschreiben ebenfalls solche in 5-Stellung nicht chlorsubstituierte 1,2,6-Thiadiazinonderivate als Pflanzenfungizide.

Die GB-A 1,577,055 beschreibt 3,5-Dichlor-1,2,6-thiadiazinon sowie entsprechende Verbindungen, in denen das Chloratom in 5-Stellung durch andere Substituenten ersetzt ist, als Wirkstoffe in pharmazeutischen Mitteln mit antimykotischer und antibakterieller Aktivität sowie als Herbicide. Der äquivalenten DE-A 2 619 090 ist zu entnehmen, dass die in 5-Stellung nicht chlorsubstituierten Thiadiazinone als bevorzugt gegenüber den 3,5-Dichlorderivaten hinsichtlich ihrer Wirksamkeit anzusehen seien. Keiner der vorstehend genannten Veröffentlichungen ist ein Hinweis darauf zu entnehmen, dass 3,5-Dihalogeno-1,2,6-thiadiazin-4-one als Biocide im technischen Materialschutz oder in Wassersystemen eingesetzt werden können.

Es wurde nun überraschenderweise gefunden, dass 3,5-Dihalogeno(insbesondere Dichlor)-1,2,6-thiadiazinon(e) sich nicht nur ausgezeichnet als Biocide zum Schutz von technischen Materialien und Wassersystemen eignen, sondern dass sie sogar den in obigen Veröffentlichungen beschriebenen anderen Thiadiazinonderivaten, entgegen der dort gegebenen Lehre, in dieser Anwendung wirkungsmässig überlegen sind.

Die vorliegende Erfindung betrifft daher die Verwendung von 3,5-Dihalogeno-1,2,6-thiadiazin-4-onen der Formel

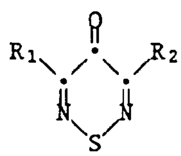

(I),

worin $R_1$ und $R_2$ unabhängig voneinander Chlor, Fluor oder Brom bedeuten, als Biocide in technischen Materialien und in Wassersystemen.

3,5-Dichlor-1,2,6-thiadiazinon ist für die erfindungsgemässe Verwendung bevorzugt; es ist, ebenso wie Verfahren zu dessen Herstellung, aus den oben genannten Veröffentlichungen bekannt. Die übrigen Verbindungen der Formel I können in analoger Weise, wie in Trav. Chim. 93, 270 (1974) für das Dichlorderivat beschrieben, aus den entsprechenden halogensubstituierten Ausgangsverbindungen hergestellt werden, sofern die entsprechenden Schwefeldihalogenide verfügbar sind. Besonders zweckmässig werden solche Verbindungen jedoch durch in der Chemie übliche Halogenaustauschreaktionen aus dem 3,5-Dichlor-1,2,6-thiadiazin-4-on erhalten. Diese können beispielsweise durch Umsetzung des letzteren mit Alkalifluoriden oder -bromiden, z.B. mit NaF oder NaBr, durchgeführt werden, vorzugsweise in für diesen Zweck geeigneten Lösungsmitteln oder mit Hilfe eines Phasentransferkatalysators. Werden unsymmetrische Produkte der Formel I gewünscht, kann bei tiefer Temperatur nur ein Chloratom gegen Fluor oder Brom ausgetauscht werden. Der Austausch des zweiten Chloratoms erfolgt erst bei höherer Temperatur.

Die Verbindungen der Formel

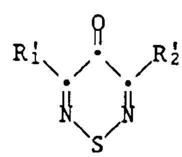

(IA),

worin $R_1'$ und $R_2'$ unabhängig voneinander Chlor, Fluor oder Brom, jedoch nicht beide gleichzeitig Chlor bedeuten, sind neu und stellen ebenfalls einen Gegenstand der vorliegenden Erfindung dar.

Die Verbindungen der Formel I entfalten besonders hohe Wirksamkeit gegenüber Schadorganismen, die

technische Materialien und Wassersysteme befallen. Besonders die sehr hohe Aktivität gegenüber Bakterien fällt auf. Aber auch gegen Pilze und Algen ist die Wirkung als sehr gut zu bezeichnen.

Als Beispiele für Materialien, die erfindungsgemäss durch die Biocide der Formel I geschützt werden können, seien beispielsweise Holz, Zellstoff, Papier, Kunststoffe, Ueberzüge (z.B. Lacke), Farben (Farbstofformulierungen), Erdöl, Treibstoffe, Bohr- und Schneidöle, Schmierstoffe, Fette, Wachse, Textilien, Leder, Gläser, Gummi und Klebstoffe sowie industrielle Wasserkreisläufe genannt.

Besonders zweckmässig ist die Verwendung der Biozide der Formel I für Holz, Kunststoffe, Farben, Lacke und industrielle Wasserkreisläufe, insbesondere für Holz, Gegenstände aus Polyvinylchlorid, Dispersionsfarben und Antifoulingfarben.

Die Wirkung der erfindungsgemäss verwendbaren Verbindungen kann vorteilhaft in konservierenden und desinfizierenden Ausrüstungen von Kunststoffen, z.B. Polyamiden, Polyurethanschäumen oder Polyvinylchlorid, ausgenützt werden. Bei der Verwendung von Weichmachern ist es vorteilhaft, den antimikrobiellen Zusatz dem Kunststoff im Weichmacher gelöst bzw. dispergiert zuzusetzen. Die Kunststoffe mit antimikrobieller Ausrüstung können für Gebrauchsgegenstände aller Art, bei denen eine Wirksamkeit gegen verschiedenste Keime, wie Bakterien und Pilze, erwünscht ist, Verwendung finden, so z.B. in Weich-PVC-Folien, für Fussmatten, Badezimmervorhänge, Sitzgelegenheiten, Trittroste in Schwimmbädern, Wandbespannungen etc.

Werden Farben (Anstrichformulierungen) geschützt, handelt es sich dabei vorzugsweise um Dispersionsfarben und Antifoulingfarben. Diese enthalten beispielsweise als Bindemittel die dem Fachmann bekannten Lackrohstoffe, wie natürliche und synthetische Harze, homo- und copolymere Produkte mit den Monomeren Vinylchlorid, Vinylidenchlorid, Styrol, Vinyltoluol, Vinylestern, Acrylsäure und Methacrylsäure, sowie deren Estern, ferner Chlorkautschuk, natürlicher und synthetischer Kautschuk, gegebenenfalls chloriert oder cyclisiert, auch Reaktionsharze, wie Epoxidharze, Polyurethanharze, ungesättigte Polyester, die gegebenenfalls durch Zusatz von Härtern in filmbildende, höhermolekulare Produkte übergeführt werden können.

Bei der Verwendung zum Schützen von Holz wird insbesondere die hervorragende Wirkung der Verbindungen der Formel I gegen die die Verrottung des Holzes bewirkenden Pilze und Bakterien ausgenutzt. Zweckmässig wird das zu schützende Holz mit einer Formulierung (z.B. Holzschutzlasur) behandelt, die die Verbindung der Formel I enthält. Auf diese Weise können z.B. Baumaterialien aus Holz, aber auch Gebäude, die ganz oder teilweise aus Holz bestehen, geschützt werden. Sehr aktiv sind die Verbindungen der Formel I vor allem gegen Bläue- und Schimmelpilze im temporären Holzschutz, d.h. sie sind besonders geeignet für die Behandlung von frischem Holz.

Besonders hervorzuheben ist die Verwendung der Verbindungen der Formel I als Biozide in Wassersystemen. Vor allem eignen sich die Verbindungen zur Verhinderung bzw. Verminderung der Schleimbildung in Wassersystemen, beispielsweise in industriellen Wasserkreisläufen, z.B. in Kühlkreisläufen.

Im allgemeinen können unter anderem die folgenden Wassersysteme mit Hilfe der Biocide der Formel I geschützt werden:

Industrielles Kühlwasser, z.B. für Kraftwerke oder chemische Anlagen, für Stahl- und Papierfabriken sowie für Brauereien. Es kann sich dabei um geschlossene oder offene Kreisläufe, z.B. mit Kühltürmen, handeln; ferner Prozessabwässer, insbesondere solche, die Nährstoffe für Mikroorganismen enthalten, wie z.B. Abwasser aus Papierfabriken und Brauereien; ferner Einpresswasser für Oelfelder oder Wasser, das in Umkehrosmoseverfahren, z.B. in industrieller Anwendung oder für Boilerwasser, eingesetzt wird.

Andere Wassersysteme, in denen die Verbindungen der Formel I eingesetzt werden können, ist Kreislaufwasser in der Papierindustrie, Kühlwasser in der Düngemittelproduktion, in Oelraffinerien, in der Metallherstellung (z.B. Stahl und Kupfer), in der petrochemischen und gummierzeugenden Industrie sowie in der Textil- und Faserindustrie, in der Gaserzeugung, in der Mineralienaufarbeitung, in der Glas-, Keramik-, Lebensmittel- und Lederherstellung, in der Schwer- und Leichtindustrie inklusive Metall- und Autoherstellung, in der Möbelherstellung, in der Elektronikindustrie, in der Lack- und Klebstoffindustrie und in anderen Herstellungsbetrieben.

Weitere Anwendungsgebiete betreffen die Behandlung von geothermischem Wasser, von Wasser in Zentralheizungen und Klimaanlagen in privaten, öffentlichen oder Industriegebäuden, von Wasser für hydrostatische Untersuchungen von Leitungen und Gefässen, von Wasser für Schwimmbecken und von Kühlwasser für Schiffsmaschinen, sowie von Industrieteichen.

Insbesondere bei der Bekämpfung von Schadorganismen in Wassersystemen wie Wasserkreisläufen (z.B. in Kühlwassersystemen) können bei der erfindungsgemässen Verwendung der Verbindungen der Formel I gleichzeitig weitere übliche Hilfsmittel zugesetzt werden, wie z.B. Korrosionsinhibitoren, Kesselsteinverhinderer, Mittel für die Weichmachung des Wassers, Maskierungsmittel, z.B. polymere Phosphite, Phosphate, Amide der Phosphorsäure, Phosphonsäuren, polymere Carbonsäuren von z.B. Acrylsäure oder Maleinsäure, deren Anhydride oder Salze und andere Zusätze.

Von besonderer praktischer Bedeutung ist die Verwendung der Verbindungen der Formel I als Biocide in industriellen Wasserkreisläufen, in Schwimmbecken und Industrieteichen; in Kühl- und Prozesswasser, insbesondere in Kühlwasser in Kraftwerken, chemischen Anlagen, Stahl- oder Papierfabriken, Brauereien, Schiffen oder Meerwassermaschinen; in Einpresswasser für Oelfelder; sowie in geothermischem Wasser oder Wasser in Zentralheizungssystemen, Klimaanlagen oder in Wasser für hydrostatische Untersuchungen.

Ein weiteres Anwendungsgebiet der vorliegenden Erfindung ist die Desinfektion von Oberflächen. Diese können aus den verschiedensten Materialien, z.B. aus Holz, Kunststoff, Metall usw. sein. Insbesondere wären Oberflächen von Möbeln und Gebrauchsgegenständen in Spitälern zu erwähnen.

Die vorliegende Erfindung betrifft auch ein Verfahren zum Schützen vor dem Befall durch Schadorganismen von technischen Materialien und Wassersystemen oder zur Bekämpfung derselben auf oder in technischen Materialien und Wassersystemen, das dadurch gekennzeichnet ist, dass man besagten Materialien bzw. Systemen eine Verbindung der Formel I, insbesondere 3,5-Dichlor-1,2,6-thiadiazin-4-on, einverleibt bzw. auf diese aufbringt; sowie die genannten Materialien und Wassersysteme, die eine Verbindung der Formel I enthalten. Bevorzugte technische Materialien und Wassersysteme sind vorstehend bei der Erläuterung der erfindungsgemässen Verwendung der Verbindungen der Formel I angegeben.

Die Menge an Verbindungen der Formel I, die den Wassersystemen und den technischen Materialien zugegeben bzw. auf diese aufgebracht wird, hängt natürlich weitgehend von der jeweiligen Anwendungsart ab und kann deshalb in weiten Grenzen variieren. Wegen der ausgezeichneten Wirksamkeit der Verbindungen der Formel I kann mit in Vergleich zu analogen Mitteln niedrigen Konzentrationen das Auslangen gefunden werden, wodurch sich auch besonders günstige ökologische Aspekte ergeben.

Die Verbindungen werden je nach Verwendungszweck in den dem Fachmann bekannten Konzentrationsbereichen eingesetzt. Während in Wassersystemen (Kühlwaser usw.) bereits Konzentrationen im ppm-Bereich genügen, sind in Antifoulingrezepturen Konzentrationen bis 40 Gew.-% üblich.

Wegen des breiten Anwendungsspektrums kommen beispielsweise, bezogen auf das jeweils zu behandelnde Substrat, Konzentrationen an Verbindung der Formel I von 0,1 ppm bis 40 Gew.-% in Betracht. Typische Konzentrationen in Holzschutzmitteln sind 0,01 bis 10, insbesondere 0,1 bis 5 Gew.-%, etwa ebensoviel bei der Ausrüstung von Kunststoffen, wie z.B. Weich-PVC-Folien, 0,1-40, insbesondere 0,5 bis 20, z.B. 0,5 bis 10 Gew.-% in Farben, wie z.B. Dispersions- und Antifoulingfarben, 0,01-5, insbesondere 0,01-1 Gew.-% in Erdöl, Treibstoffen, Oelen, Fetten, Wachsen, Bohr- und Schneidölen, Schmierstoffen usw., sowie 0,01 bis 1000, vorzugsweise 0,05 bis 100, insbesondere 0,05 bis 50, z.B. 1-40, aber auch 0,01-5 ppm in Wassersystemen, wie in Kühlkreisläufen usw.

Die Verbindungen der Formel I können in reiner Form oder zusammen mit Trägerstoffen wie z.B. Formulierungshilfsmitteln appliziert werden. Sie können auch in flüssigen Streichmitteln u.ä. suspendiert werden, wobei gegebenenfalls zur Bildung von gleichmässigen Dispersionen Netzmittel oder Emulgiermittel die gleichmässige Verteilung des Wirkstoffs fördern können. Es können auch weitere Biocide hinzugefügt werden.

Zusammenfassend seien nochmals einige wichtige Anwendungsgebiete für die Verbindungen der Formel I angeführt. Letztere eignen sich z.B., wie bereits erwähnt, als Konservierungsmittel für technische Lösungen, als Zusätze zu Baustoffen, vorzugsweise zu Mörteln, Putzen (Innenputz, Aussenputz, Estrich usw.) oder zu hydraulische Bindemittel enthaltenden Mischungen wie Beton, als Zusätze zu Metallbearbeitungsflüssigkeiten, vorzugsweise zu Bohr- und Schneidölen, ferner auch zu Walzwerk-, Schmiede-, Trenn- und Schmierstoffen, als Zusatz zu Anstrichstoffen, zweckmässig zu Farben und Lacken, vorzugsweise zu Dispersionsfarben, als aktives Medium in Fäulnis hemmenden oder verhindernden Anstrichen, sogenannten Anti-Fouling-Anstrichen, zur bioziden Ausrüstung von Oberflächenbeschichtungen allgemein und von Holz, Kunststoffen, Polymermaterialien, Papier, Leder und Textilien, zur oberflächlichen Behandlung von oder zur Einarbeitung in Baumaterialien und Bauelemente aus Polymermaterial, als Antischleimmittel in Wassersystemen, vorzugsweise in Systemen für Kühlwasser und in Brauchwasser, insbesondere der celluloseverarbeitenden Industrie, wie der Papierindustrie, und schliesslich zur Desinfektion.

Neben der Verwendung in Wassersystemen, wo inbesondere ein aussergewöhnlich guter Effekt gegen die durch Bakterien hervorgerufene Schleimbildung zu beobachten ist, ist ein weiterer bevorzugter Anwendungsbereich jener in Schutzanstrichstoffen, insbesondere in Antifoulingfarben, die neben den üblichen Grund- und Zusatzstoffen z.B. 0,5-40 Gew.-%, vorzugsweise 3 bis 15 Gew.-%, bezogen auf die Gesamtmischung, wenigstens einer Verbindung der Formel I, enthalten.

Uebliche Grundstoffe für Antifoulingfarben sind die als Bindemittel bezeichneten und dem Fachmann bekannten Lackrohstoffe, wie natürliche und synthetische Harze, homo- und copolymere Produkte mit den Monomeren Vinylchlorid, Vinylidenchlorid, Styrol, Vinyltoluol, Vinylestern, Vinylalkoholen, Acrylsäure und Methacrylsäure sowie deren Estern, Polyester- und Polyamidharze, ferner Chlorkautschuk, natürlicher und synthetischer Kautschuk, gegebenenfalls chloriert oder cyclisiert, dann auch Reaktionsharze wie Epoxidharze, Polyurethanharze, ungesättigte Polyester, die gegebenenfalls durch Zusatz von Härtern in filmbildende höhermolekulare Produkte übergeführt werden können.

Die Bindemittel können flüssig sein oder in gelöster Form vorliegen. Bei gelösten Bindemitteln, auch Thermoplasten, kann ein Schutzfilm auch durch Verdampfen des Lösungsmittels gebildet werden. Feste Beschichtungsmittel können z.B. im Pulverbeschichtungsverfahren auf Gegenstände aufgebracht werden. Weitere übliche Grundstoffe sind z.B. Teer, Modifikatoren, Farbstoffe, anorganische oder organische Pigmente, Füllstoffe und Härter.

Die Verbindungen der Formel I können schliesslich auch in elastomeren Beschichtungen sowie auch in Silikon-Elastomeren und Fluor enthaltenden Polymeren Anwendung finden.

In der Praxis werden Wirkstoffe vielfach in Kombination mit anderen Bioziden eingesetzt. Auch die Verbindungen der Formel I können mit anderen Bioziden kombiniert werden. Bei Antifoulingfarben erweisen sich Kombinationen von Produkten oft als vorteilhaft. So können die erfindungsgemässen Verbindungen z.B. in Kombination mit $Cu_2O$, CuSCN, Zinkoxid, Triorganozinnverbindungen, wie Tributylzinnfluorid oder Triphenylzinnchlorid, metallischem Kupfer oder Triazinen oder allgemein mit solchen Verbindungen, die dem Fachmann als gegen tierischen oder pflanzlichen Bewuchs wirksam bekannt sind, kombiniert werden.

Eine weitere Verwendungsform der Verbindungen der Formel I ist das Einarbeiten in Kunststoffe oder natürliche oder synthetische Kautschuke, oder das Aufbringen auf Oberflächen von Formkörpern aus diesen Kunststoffen, z.B. Polyvinylchloriden und deren Co- und Mischpolymerisaten, Polyalkylenen, Polyacrylaten, Polystyrolen, Copolymeren davon, Polyurethanen oder Polyisocyanaten, Polyestern, Epoxidharzen usw.

Sinnvoll ist die Verwendung insbesondere bei Kunststoffen oder Polymermaterialien, die als Baumaterialien Verwendung finden und beispielsweise der Witterung ausgesetzt sind oder im Bereich von feuchtenden oder nässenden Bereichen eingesetzt werden. Dabei können beispielhaft Dachmaterialien oder Verkleidungen aus Polyvinylchlorid, Butylkautschuk, chloriertem Polyethylen, Polyisobutylen, Chloropren und Chloroisopren, EPDM sowie PVC-Mischpolymerisaten mit Vinylacetat oder Ethylvinylacetat, Polyacrylnitrilstyrol, gegebenenfalls in Mischung mit faserigen Füllstoffen (gegebenenfalls auch im Verschnitt mit Bitumen), oder geschäumte Polyvinylchloride oder Polystyrole, als Isolationsmaterialien gegen Wärme und Kälte, genannt werden.

Die Verbindungen der Formel I sind sowohl für genannte, als auch für weitere Anwendungen geeignet. Sie sind nicht hygroskopisch und thermostabil und haben eine geringe Wasserlöslichkeit.

Die Erfindung umfasst auch Zusammensetzungen (Formulierungen) enthaltend wenigstens eine Verbindung der Formel I. Die Form und Art der jeweiligen Zusammensetzung, enthaltend die erfindungsgemässe Verbindung, richtet sich nach dem Einsatzzweck.

Zur Applikation können die Verbindungen der Formel I in den folgenden Aufarbeitungsformen vorliegen (wobei die Gewichts-Prozentangaben in Klammern vorteilhafte Mengen an Wirkstoff darstellen):

Feste Aufarbeitungsformen:

Stäubemittel und Streumittel (bis zu 10 %) Granulate, Umhüllungsgranulate, Imprägnierungsgranulate und Homogengranulate, Pellets (Körner) (1 bis 80 %).

Flüssige Aufarbeitungsformen:

a) in Wasser dispergierbare Wirkstoffkonzentrate:
Spritzpulver (wettable powders) und Pasten (25-90 % in der Handelspackung, 0,01 bis 15 % in gebrauchsfertiger Lösung), Emulsions- und Lösungskonzentrate (10 bis 50 %; 0,01 bis 15 % in gebrauchsfertiger Lösung);

b) Organische Lösungen (0,1 bis 20 %); Aerosole.

Die bioziden Mittel können auch weitere Aktivsubstanzen enthalten, bzw. die Verbindungen der Formel I können auch zusammen mit anderen bioziden Wirkstoffen in den vorstehend genannten Anwendungsarten eingesetzt werden.

Beispiele für solche weitere biocide Wirkstoffe sind:

a) Organo-Schwefelverbindungen, z.B. Methylen-dithiocyanat (MBT), Isothiazolone oder 3,5-Dimethyl-tetrahydro-1,3,5-2H-thiodiazin-2-thion (DMTT). Solche Substanzen werden insbesondere gegen Schleimbildung bei der Papierherstellung eingesetzt.

b) Chlorierte Phenole, wie Natrium-pentachlorphenolat. Solche Verbindungen zeichnen sich durch ein sehr breites Wirkungsspektrum aus.

c) Kupfersalze, wie Kupfersulfat und Kupfernitrat als zusätzliche Algicide.

d) 2,2-Dibrom-3-nitrilopropionamid (DBNPA) als Algicid, Fungicid und Bactericid.

e) Chlor und Brom als Algicide und Bactericide, welche besonders bei der Wasserbehandlung zum Einsatz gelangen.

f) Chlordioxid, Chlorisocyanurate und Hypochlorite als Biocide, welche ebenfalls besonders bei der Wasserbehandlung eingesetzt werden können.

g) Triazine, z.B. 2-Methylthio-4-t-butylamino-6-cyclopropylamino-s-triazin, insbesondere als Algicide.
h) Triorganozinnverbindungen, z.B. Bis-tributylzinnoxid (TBTO), insbesondere als Fungicide und Algicide.
i) Holzbiocide
ia) Salzgemische auf Basis von
Silicofluoriden, Hydrogenfluoriden, anorg. Borverbindungen, Chromaten, Fluoriden, Arsen (Oxid, Arsenate), Kupfersalze (Sulfat, Naphthenat), Zinn- und Zinksalzen, Quecksilberverbindungen.
ib) Teerölpräparate
ic) Organische Wirkstoffe, wie
Pentachlorphenol, Phenol, DDT, Dieldrin, Lindan, Gammexan, Chlorierte Naphthaline, Dichlorfluanid, Tributylzinnverbindungen, Pyrethroide, 3-Jod-2-propenyl-N-butylcarbamat, Furmecyclox.
j) Desinfektionsmittel
ja) Phenol oder Phenolderivate
jb) Formaldehyd und/oder sonstige Aldehyde bzw. Derivate
jc) Chlor, organ. oder anorganische Substanzen mit aktivem Chlor
jd) Amphotenside.

Kombinationen der erfindungsgemäss verwendbaren Thiadiazinone mit anderen Biociden, z.B. solchen aus den vorstehenden Klassen, können synergistische Effekte zeigen. Solche Effekte treten insbesondere bei Kombinationen mit Aminen, quaternären Ammoniumsalzen, Isothiazolonen und Thiocyanaten auf. Beispiele dafür sind Kombinationen von 3,5-Dichlor-1,2,6-thiadiazin-4-on mit 1) Kokosamin 2) 5-Chlor-2-methyl-4-isothiazolon-3-on/2-Methyl-4-isothiazolon-3-on-Mischungen (z.B. 2,65:1), 3) Dodecyl/Tetradecylbenzyldimethylammoniumchlorid und 4) Methylen-bis-thiocyanat.

Selbstverständlich können in solchen Formulierungen ausserdem noch weitere Substanzen und Hilfsmittel enthalten sein, wie sie üblicherweise in solchen Zubereitungen mitverwendet werden. Hierzu gehören z.B. anionische, kationische oder nichtionische oberflächenaktive Substanzen, Elektrolyte, Komplexbildner, Lösungsvermittler sowie Farb- und Duftstoffe. Diese Zusätze dienen beispielsweise zur Verbesserung des Netzvermögens, der Härtungsstabilität, zur Viskositätseinstellung und zur Erhöhung der Kältestabilität der Lösungen.

Bei der Verwendung in Dispersionsfarben und -putzen können die Verbindungen der Formel I z.B. auch mit weiteren Fungiziden kombiniert werden. In der Wasserbehandlung sind Kombinationen mit einem Bakterizid möglich, um schleimbildende Bakterien zu bekämpfen. Solche Kombinationen können anwendungstechnische Vorteile bringen. In vielen Fällen ist auch die Kombination mit weiteren Algiziden von Vorteil.

Die Erfindung umfasst auch Zusammensetzungen enthaltend a) einen Anstrichstoff und b) eine wirksame Menge wenigstens einer Verbindung der Formel I.

Wie bereits erwähnt, besteht ein besonderer Vorteil der erfindungsgemäss verwendbaren Verbindungen der Formel I darin, dass ihre Einsatzkonzentration niedrig gehalten werden kann, verglichen mit Produkten ähnlicher Wirkungsrichtung. Es ist überraschend, dass sie trotz dieser niedrigen Einsatzkonzentrationen die Schadorganismen, insbesondere Bakterien, nicht nur hinreichend in ihrem Wuchs hemmen, sondern sie auch abtöten, wodurch die genannten Verbindungen auch sehr gut zur Desinfektion eingesetzt werden können.

Es ist ferner überraschend, dass unter Bedingungen, unter denen die erfindungsgemäss verwendbaren Verbindungen nicht mehr wuchshemmend wirken oder z.B. in Wasserkreisläufen auch dann, wenn die Organismen (z.B. Bakterien) sich wieder vermehren können, die Besiedlung durch die Verbindungen der Formel I auf den Oberflächen verhindert oder zumindest stark vermindert wird. Die Verbindungen der Formel I wirken daher in sehr kleinen Konzentrationen (z.B. 0,01 bis 10 ppm) bereits als "deposit control agents", d.h. sie verhindern die Besiedlung mit Mikroorganismen auf den Substraten, die geschützt werden sollen (z.B. verhindern sie die Schleimbildung), obwohl sie nur in "sub-bioziden" Mengen appliziert werden.

Die nachfolgenden Beispiele erläutern die Erfindung weiter, insbesondere zeigen sie die gute Wirksamkeit der Verbindungen der Formel I. In diesen Beispielen ebenso wie in der übrigen Beschreibung und in den Patentansprüchen bedeuten Prozente Gewichtsprozente und Teile Gewichtsteile, soweit nichts anderes angegeben ist.

Beispiel 1: Bestimmung der minimalen Hemmkonzentration (MIC) für sechs Bakterienstämme

MIC = Minimal inhibition concentration, entspricht der Konzentration einer Aktivsubstanz, die gerade noch ausreicht, den Wuchs von Bakterien in einer Nährlösung zu hemmen.

Zum Einsatz kommen Stämme, welche aus "Uebernachtkulturen" (von jeweils einer Kolonie auf Caso-Pepton-Agar ausgehende 24 Stunden-Kultur) gewonnen werden:

| | Bezeichnung | Bezugsquelle und Nummer | Keimzahl der ÜNK/ml |
|---|---|---|---|
| A | Bacillus subtilis | ATCC 6051 | $1,3 \times 10^{9}$ |
| B | Serratia marcescens | ATCC 13880 | $4,0 \times 10^{10}$ |
| C | Enterobacter aerogenes | ATCC 13048 | $1,6 \times 10^{10}$ |
| D | Alcaligenes denitrificans | ATCC 15173 | $1,3 \times 10^{10}$ |
| E | Proteus vulgaris | ATCC 13315 | $2,4 \times 10^{10}$ |
| F | Pseudomonas aeruginosa | ATCC 10145 | $1,8 \times 10^{10}$ |

ÜNK = Uebernachtkultur

100 mg der zu prüfenden Substanz werden in 5 ml Dimethylformamid gelöst. Zu Caso-Pepton-Bouillon, die mit der jeweiligen ÜNK angeimpft ist, wird von dieser Lösung jeweils so viel zugesetzt, dass Konzentrationen von 3, 10, 30, 100 bzw. 300 ppm der zu prüfenden Substanz in der Nährlösung erreicht werden. Die Röhrchen mit der beimpften Nährlösung werden bei 30°C 24 Stunden lang in einem Schüttelbad bebrütet und danach auf Wuchs oder Nichtwuchs der Bakterien ausgewertet. Die so ermittelten MIC-Werte (in mg/l) sind in Tabelle 1 zusammengefasst.

Tabelle 1:

| | MIC (mg/l) | | | | | |
|---|---|---|---|---|---|---|
| Stämme | A | B | C | D | E | F |
| geprüfte Substanz | | | | | | |
| 3,5-Dichlor-1,2,6-thiadiazin-4-on | 10 | 3 | 10 | 3 | 3 | 3 |

Beispiel 2: Bestimmung der "minimalen Konzentration zur Abtötung einer Bakterienkultur" (MKC-Mischkultur)

MKC = Minimal killing concentration, entspricht der Konzentration einer Aktivsubstanz, die gerade noch ausreicht, die Bakterien in Pufferlösung zu töten.

Zum Einsatz kommen Stämme, welche aus "Uebernachtkulturen" (von jeweils einer Kolonie auf Caso-Pepton Agar ausgehende 24 Stunden-Kultur) gewonnen werden:

| | Bezeichnung | Bezugsquelle und Nummer | Keimzahl der ÜNK/ml |
|---|---|---|---|
| G | Escherichia coli | ATCC 4157 | $1,0 \times 10^{10}$ |
| H | Bacillus cereus var. mycoides | DSM 299 | $3,6 \times 10^{8}$ |
| I | Staphylococcus aureus | ATCC 6538 P | $4,5 \times 10^{9}$ |
| C | Enterobacter aerogenes | ATCC 13048 | $1,6 \times 10^{10}$ |
| E | Proteus vulgaris | ATCC 13315 | $2,4 \times 10^{10}$ |
| F | Pseudomonas aeruginosa | ATCC 10145 | $1,8 \times 10^{10}$ |

ÜNK = Uebernachtkultur

Je 0,5 ml der ÜNK der obigen Tabelle werden zusammen in einem Erlenmeyer-Kolben gut durchgeschüttelt. Die so erhaltene Mischkultur wird einer Tyrode-Lösung in einer solchen Menge zugegeben, dass eine Keimzahl von $10^7$ bzw. $10^6$ bzw. $10^5$ Keime/ml erzielt wird. Dann setzt man die zu prüfende Substanz in der gewünschten Testkonzentration zu und bebrütet 5 Stunden bei 30°C. Nach Auftropfen von 5 µl der so behandelten Kulturen auf Caso-Agar-Platten und 24stündigem Bebrüten bei 30°C erfolgt die Bewertung der Platten auf Wuchs bzw. Abtötung der Bakterien.

Tabelle 2

| Zusatz von 3,5-Dichlor-1,2,6-thiadiazin-4-on in einer Konzentration von | Keimzahl/ml $10^7$ | $10^6$ | $10^5$ |
|---|---|---|---|
| | Bewertung | | |
| 6 mg/l | (+) | - | - |
| 10 mg/l | - | - | - |
| 30 mg/l | - | - | - |
| 60 mg/l | - | - | - |
| 100 mg/l | - | - | - |
| 0 mg/l (Wuchskontrolle) | + | + | + |

Bewertungsschema:

\+ Bakterienwachstum, keine Abtötung
(+) Bakterienwuchs, aber geringe Abtötung (> 10 Kolonien)
(-) Merkliche Abtötung des Bakterienwuchses (≦ 10 Kolonien)
\- Vollständige Abtötung, kein Wuchs vorhanden (0 Kolonien)

Beispiel 3: Bestimmung der Besiedlung in wachsender Kultur

Edelstahlzylinder werden in eine wachsende Kultur von Pseudomonas fluorescens gegeben und die Besiedlung der Oberfläche durch Messung des ATP-Gehaltes (Adenosin-tri-phosphat, angegeben in Millivolt (mV)) mittels bekannter Hitzeextraktionsverfahren und Bioluminiscenz bestimmt. Gleichzeitig wird der ATP-Gehalt der Zellen im Medium untersucht. Hat sich der ATP-Gehalt der Zellen im Medium nicht verringert und ist

der ATP-Extraktgehalt vom Zylinder gering, so bedeutet dies, dass sich die Zellen nicht auf die Metalloberfläche absetzen konnten. Der ATP-Gehalt wird vor der Zugabe der zu prüfenden Verbindung 3,5-Dichlor-1,2,6-thiadiazin-4-on gemessen. Danach wird die zu prüfende Verbindung in einer Konzentration von 5 mg/l zugegeben und der ATP-Gehalt wird 30 Minuten nach dieser Zugabe wieder bestimmt (im Medium und auf dem Zylinder). Zum Vergleich wird eine nicht mit 3,5-Dichlor-1,2,6-thiadiazin-4-on behandelte Probe herangezogen. Die Behandlung mit der Prüfverbindung wird 2x vorgenommen (Test 1 und Test 2). Die Resultate sind Tabelle 3 zu entnehmen.

Tabelle 3

| Zusatz | ATP im Medium (mV) $T_0$ | ATP im Medium (mV) $T_1$ | ATP auf dem Zylinder (mV) |
|---|---|---|---|
| 5 mg/l 3,5-Dichlor-1,2,6-thiadiazin-4-on (Test 1) | 1,66 | 2,98 | 1,20 |
| 5 mg/l 3,5-Dichlor 1,2,6-thiadiazin-4-on (Test 2) | 4,40 | 6,78 | 1,51 |
| kein Zusatz (Vergleichsprobe) | 2,10 | 4,92 | 2,39 |

ATP im Medium ($T_0$) = vor Substanzzugabe
ATP im Medium ($T_1$) = 30 Min. nach Substanzzugabe
ATP auf dem Zylinder = 30 Min. nach Substanzzugabe

Wie aus der Tabelle zu erkennen, ist überraschenderweise durch Zugabe von 3,5-Dichlor-1,2,6-thiadiazin-4-on im Gegensatz zum Vergleich der ATP-Gehalt auf den Zylindern reduziert, obwohl die ATP-Konzentration im Medium (bei unterschiedlichem Ausgangs-ATP-Gehalt) nach Zugabe des Produktes noch anstieg, d.h. unter diesen Bedingungen 5 ppm der Prüfsubstanz noch nicht biocid wirken. Letztere reduziert trotz der geringen Einsatzkonzentration die Besiedlung von Pseudomonas fluorescens.

Beispiel 4: Bestimmung der Besiedlung mit Mikroorganismen in Kreisläufen

Die im Raum stehenden Kreisläufe bestehen aus:

a) einem Kunststoff-Fass mit einem Volumen von 113 l
b) einer Pumpe (21 l/min bei 3 m Förderhöhe)
c) einem Kühlturm mit Oregon(Splint)-, Oregon(Kernholz)-, Eiche-, Fichte- und PVC-Platte.

Frischwasser wird nur zur Auffüllung des verdunsteten Wassers zugegeben. Die Kreisläufe sind durch den natürlichen Staubeinfall und nicht durch gezeilte Beimpfung infiziert.

Zur Verhinderung der Besiedlung mit Bakterien wird der Kreislauf zweimal mit 10 ppm der Prüfsubstanz (3,5-Dichlor-1,2,6-thiadiazin-4-on) behandelt.

Ausgewertet wird der Versuch durch Bestimmung des Keimtiters mittels Verdünnen und Ausspateln sowie durch Messen der Besiedlung auf in die Fässer gehängten Stahlzylindern. Die Besiedlung wird durch Messung des ATP-Gehaltes auf den Zylindern über ein bekanntes Hitzeextraktionsverfahren und Bioluminiscenz (siehe Beispiel 3) bestimmt. Die erhaltenen Resultate sind der Fig. 1 zu entnehmen.

Aus den Kurven der Fig. 1 ist die hervorragende Wirkung der Prüfsubstanz (3,5-Dichlor-1,2,6-thiadiazin-4-on) zu erkennen. 10 ppm des Produktes töten die meisten Bakterien in dem Kreislauf ab (Reduzierung der Keimzahl um 5 Potenzen) und damit findet auch keine Besiedlung statt. Nach 3 Tagen klingt die wuchshemmende Wirkung ab. Ueberraschenderweise findet aber trotz Wuchs der Bakterien praktisch keine Besiedlung der Zylinder statt.

Beispiel 5: Bestimmung der minimalen Hemmkonzentration (MIC) für Algen

Die in Algen-Nährmedium über 14 Tage gewachsenen Kulturen der folgenden Algenstämme

J Oscillatoria geminata
K Nostoc spez.
L Phormidium foveolarum
M Chlorella vulgaris
N Scenedesmus spec.
O Ulothrix subtilissima
P Tribonema aequale

werden in Algen-Nährmedium 1:100 bzw. 1:200 verdünnt. Die Suspensionen werden auf Algen-Agar, der 3,5-Dichlor-1,2,6-thiadiazin-4-on in verschiedenen Konzentrationen (0,1 0,3, 1, 3 und 10 mg/l) enthält, aufgetropft. Nach einer Bebrütung von 14 Tagen bei Zimmertemperatur unter 14 h Licht/10 h Dunkel-Wechsel wird nach Wuchs ausgewertet. Die erhaltenen MIC-Werte sind der Tabelle 4 zu entnehmen.

Tabelle 4:

| | MIC (mg/l) | | | | | | |
|---|---|---|---|---|---|---|---|
| Alge | J | K | L | M | N | O | P |
| geprüfte Substanz | | | | | | | |
| 3,5-Dichlor-1,2,6-thiadiazin-4-on | 0,3 | 0,1 | 0,1 | 0,1 | 3 | 0,1 | 0,1 |

Beispiel 6: Bestimmung der minimalen Hemmkonzentration (MIC) für Pilze

Als Pilzstämme werden verwendet:

Q Aspergillus niger
R Sacharomyces cerevisiae
S Penicillium funiculosum
T Chaetomium globosum
U Aureobasidium pullulans
V Coniophora puteana

Die Untersuchung wird mit dem bekannten Agar-Inkorporations-Test im Malzextrakt-Agar durchgeführt. Zur Hemmung wird jeweils soviel an 3,5-Dichlor-1,2,6-thiadiazin-4-on zugegeben, dass Konzentrationen von 10, 50 und 100 mg/l im Agar resultieren. Die zur Hemmung des Wuchses der Pilze (von aufgetropften Pilzsporen ausgehend) benötigten Konzentrationen (mg/l) sind in der Tabelle 5 angegeben.

Tabelle 5:

| | MIC (mg/l) | | | | | |
|---|---|---|---|---|---|---|
| Pilz | Q | R | S | T | U | V |
| geprüfte Substanz | | | | | | |
| 3,5-Dichlor-1,2,6-thiadiazin-4-on | ≤10 | ≤10 | ≤10 | ≤10 | ≤10 | ≤10 |

Beispiel 7: Bestimmung der Schutzwirkung gegen Pilzbefall in frischem Holz

Die Versuche werden analog dem NWPC-Standard 1.4.1.3/79 durchgeführt:

Mycological testing of anti-stain
Preservatives for freshly sawn timber
the mini-board method
NWPC-Standard 1.4.1.3/79

Es wird eine 10%ige Stammlösung von 3,5-Dichlor-1,2,6-thiadiazin-4-on in folgendem Lösungsmittelgemisch angesetzt:

60 % Phenylpolyethylenglycolether
30 % Polyethylenglycolölsäureester
10 % Methanol

Diese Stammlösung wird mit Wasser so verdünnt, dass 0,01%ige, 0,02%ige, 0,025%ige, 0,05%ige, 0,1%ige und 0,2%ige stabile Emulsionen resultieren.

Kiefernbretter (10 x 50 x 300 mm) werden 20 s lang bis zur Hälfte in die jeweilige Lösung getaucht, 24 h getrocknet und mit folgenden Mischkulturen angeimpft:

Testpilze:

1. "Blue stain fungi"

Mischkultur aus

Aureobasidium pullulans
Sclerophoma pityophila
Ceratocystis pilifera

2. "Mould"

Mischkultur aus

Aspergillus niger
Penicillium funiculosum
Trichoderma viride

Die beimpften Hölzer werden bei Raumtemperatur bebrütet und nach 6 Wochen wird der Bewuchs nach folgendem Schema beurteilt:

0 = ohne Pilzbewuchs
1 = Spuren von Pilz
2 = etwas Pilzbewuchs
3 = mässiger Pilzbewuchs
4 = starker Pilzbewuchs

Die erhaltenen Resultate sind in Tabelle 6 zusammengefasst.

Tabelle 6:

| Konzentration an 3,5-Dichlor-1,2,6-thiadiazin-4-on | Bewuchs | | | |
|---|---|---|---|---|
| | unbehandelte | | behandelte Hälfte | |
| 0,01 % | 4 | 4 | 4 | 4 |
| 0,02 % | 4 | 3 | 1 | 0-1 |
| 0,025 % | 2 | 2 | 0 | 0 |
| 0,05 % | 2 | 3 | 0 | 0 |
| 0,1 % | 4 | 1-2 | 0 | 0 |
| 0,2 % | 4 | 3 | 0 | 0 |

Es werden jeweils zwei Bretter behandelt.

Beispiel 8: Bestimmung der "minimalen Konzentration zur Abtötung einer Bakterienkultur" (MKC-Mischkultur)

MKC = Minimal killing concentration, entspricht der Konzentration einer Aktivsubstanz, die gerade noch ausreicht, die Bakterien in Pufferlösung zu toten.

Zum Einsatz kommen Stämme, welche aus "Uebernachtkulturen" (von jeweils einer Kolonie auf Caso-Pepton Agar ausgehende 24 Stunden-Kultur) gewonnen werden:

| | Bezeichnung | Bezugsquelle und Nummer | Keimzahl der UNK/ml |
|---|---|---|---|
| G | Escherichia coli | ATCC 4157 | 1,0 x $10^{10}$ |
| H | Bacillus cereus var. mycoides | DSM 299 | 3,6 x $10^{8}$ |
| I | Staphylococcus aureus | ATCC 6538 P | 4,5 x $10^{9}$ |
| C | Enterobacter aerogenes | ATCC 13048 | 1,6 x $10^{10}$ |
| E | Proteus vulgaris | ATCC 13315 | 2,4 x $10^{10}$ |
| F | Pseudomonas aeruginosa | ATCC 10145 | 1,8 x $10^{10}$ |

UNK = Uebernachtkultur

Je 0,5 ml der UNK der obigen Tabelle werden zusammen in einem Erlenmeyer-Kolben gut durchgeschüttelt. Die so erhaltene Mischkultur wird einer Tyrode-Lösung in einer solchen Menge zugegeben, dass eine Keimzahl von $10^7$ bzw. $10^6$ Keine/ml erzielt wird. Dann setzt man die zu prüfenden Substanzen in den gewünschten Testkonzentrationen zu und bebrütet 5 und 24 Stunden bei 30°C. Nach Auftropfen von 5 µl der so behandelten Kulturen auf Caso-Agar-Platten und 24 stündigem Bebrüten bei 30°C erfolgt die Bewertung der Platten auf Wuchs bzw. Abtötung der Bakterien.

In diesem Beispiel werden Kombinationen von 3,5-Dichlor-1,2,6-thiadiazin-4-on und anderen Biociden eingesetzt.

Wie aus den folgenden Tabellen 7 und 8 zu erkennen ist, zeigt 3,5-Dichlor-1,2,6-thiadiazin-4-on mit verschiedenen Biociden, wie z.B. Kokosamin (Dodecylamin), einer 5-Chlor-2-methyl-4-isothiazolon-3-on/2-Methyl-4-isothiazolon-3-on-Mischung (2,65:1), einer quat. Ammoniumverbindung wie $C_{12}/C_{14}$-Alkylbenzyldimethylammoniumchlorid und Methylen-bis-thiocyanat einen synergistischen Effekt. Die eingesetzten Mengen der Biocide und die erhaltenen Ergebnisse sind den Tabellen 7 und 8 zu entnehmen.

Tabelle 7:

| Zusatz von: | Keimzahl $10^6$ Keime/ml | |
|---|---|---|
| | In Konzentration von: | Wuchs/Anzahl der Kolonien nach .. Stunden (h) |
| a) Kokosamin | 5 ppm | + 5h<br>(-)24h (5 Kol.) |
| b) 3,5-Dichlor-1,2,6-thiadiazin-4-on | 3 ppm | (-) 5h (9 Kol.)<br>(-)24h (2 Kol.) |
| a) + b) | 2 + 1 ppm | - 5h<br>- 24h |
| e) 5-Chlor-2-methyl-4-isothiazolon-3-on + 2-Methyl-4-isothiazolon-3-on (2,65:1) | 1 ppm | + 5h<br>+ 24h |
| b) 3,5-Dichlor-1,2,6-thiadiazin-4-on | 1 ppm | + 5h<br>+ 24h |
| e) + b) | 0,5 +0,5ppm | + 5h<br>(-)24h (1 Kol.) |

Tabelle 8:

| Zusatz von: | Keimzahl $10^7$ Keime/ml | |
|---|---|---|
| | In Konzentration von: | Wuchs/Anzahl der Kolonien nach .. Stunden (h) |
| a) Kokosamin | 10 ppm | + 5h<br>+ 24h |
| b) 3,5-Dichlor-1,2,6-thiadiazin-4-on | 4 ppm | (-) 5h (2 Kol.)<br>(-)24h (8 Kol.) |
| a) + b) | 2 + 2 ppm | - 5h<br>- 24h |
| c) Dodecyl/Tetradecyl-benzyldimethyl-ammoniumchlorid | 10 ppm | + 5h<br>+ 24h |
| b) 3,5-Dichlor-1,2,6-thiadiazin-4-on | 5 ppm | (-) 5h (1 Kol.)<br>(-)24h (1 Kol.) |
| c) + b) | 3 + 2 ppm | (-) 5h (5 Kol.)<br>- 24h |
| f) Methylen-bis-thiocyanat | 5 ppm | + 5h<br>(+)24h |
| b) 3,5-Dichlor-1,2,6-thiadiazin-4-on | 4 ppm | (-) 5h (2 Kol.)<br>(-)24h (8 Kol.) |
| f) + b) | 2 + 2 ppm | (-) 5h (3 Kol.)<br>- 24h |

Bewertungsschema:

+ Bakterienwachstum, keine Abtötung
(+) Bakterienwuchs, aber geringe Abtötung (> 10 Kolonien)
(-) Merkliche Abtötung des Bakterienwuchses (≤ 10 Kolonien)
- Vollständige Abtötung, kein Wuchs vorhanden (0 Kolonien)

## Patentansprüche

### Patentansprüche für folgende Vertragsstaaten : BE, CH, DE, FR, GB, IT, LI, NL, SE

1. Verwendung von 3,5-Dihalogeno-1,2,6-thiadiazin-4-onen der Formel

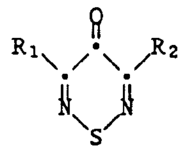

(I),

worin $R_1$ und $R_2$ unabhängig voneinander Chlor, Fluor oder Brom bedeuten, als Biozide in technischen Materialien und in Wassersystemen.

**2.** Verwendung nach Anspruch 1 von 3,5-Dichlor-1,2,6-thiadiazin-4-on.

**3.** Verwendung nach Anspruch 1 oder 2 zum Schutz von Holz, Zellstoff, Papier, Kunststoffen, Farben, Leder, Lacken, Bohr- und Schneidölen, Erdöl, Treibstoffen, Schmierstoffen, Fetten und Wachsen, Textilien, Leder, Gläsern, Gummi und Klebstoffen und von industriellen Wasserkreisläufen.

**4.** Verwendung nach Anspruch 3 zum Schützen von Holz, Kunststoffen, Farben und Lacken und industriellen Wasserkreisläufen.

**5.** Verwendung nach Anspruch 4 zum Schützen von Holz, Gegenständen aus Polyvinylchlorid und von Dispersions- oder Antifoulingfarben.

**6.** Verwendung nach Anspruch 1 oder 2, worin das Wassersystem ein industrieller Wasserkreislauf, ein Schwimmbecken oder ein Industrieteich ist.

**7.** Verwendung nach Anspruch 1 oder 2, worin das Wassersystem ein Kühl- oder Prozesswasser ist.

**8.** Verwendung nach Anspruch 7, worin das Wassersystem Kühlwasser in Kraftwerken, chemischen Anlagen, Stahl- oder Papierfabriken, in Brauereien, Schiffen oder Meerwassermaschinen ist.

**9.** Verwendung nach Anspruch 1 oder 2, worin das Wassersystem Einpresswasser für Oelfelder ist.

**10.** Verwendung nach Anspruch 1 oder 2, worin das Wassersystem geothermisches Wasser, Wasser in Zentralheizungssystemen oder Klimaanlagen oder Wasser für hydrostatische Untersuchungen ist.

**11.** Verwendung nach Anspruch 1 zum Desinfizieren von Oberflächen.

**12.** Verfahren zum Schützen vor dem Befall durch Schadorganismen von technischen Materialien und Wassersystemen oder zur Bekämpfung derselben auf oder in technischen Materialien und Wassersystemen, dadurch gekennzeichnet, dass man besagten Materialien bzw. Systemen ein 3,5-Dihalogeno-1,2,6-thiadiazin-4-on der in Anspruch 1 angegebenen Formel I, insbesondere 3,5-Dichlor-1,2,6-thiadiazin-4-on, einverleibt bzw. auf diese aufbringt.

**13.** Verfahren nach Anspruch 12, worin die technischen Materialien bzw. die Wassersysteme Holz, Zellstoff, Papier, Kunststoffe, Farben, Lacke, Bohr- und Schneidöle, Erdöl, Treibstoffe, Schmierstoffe, Fette und Wachse, Textilien, Leder, Gläser, Gummi und Klebstoffe und industrielle Wasserkreisläufe sind.

**14.** Verfahren nach Anspruch 12 oder 13, worin das Thiadiazinon in einer Menge von 0,0001 bis 40, insbesondere 0,01 bis 10 Gew.-%, bezogen auf die technischen Materialien bzw. Wassersysteme, eingesetzt wird.

**15.** Verfahren nach Anspruch 12, worin mindestens ein weiteres Biocid zugesetzt wird.

**16.** Technische Materialien und Wassersysteme, enthaltend als Biocid ein 3,5-Dihalogeno-1,2,6-thiadiazin-4-on der Formel I, insbesondere 3,5-Dichlor-1,2,6-thiadiazin-4-on.

**17.** Materialien nach Anspruch 16, dadurch gekennzeichnet, dass es sich dabei um Holz, Zellstoff, Papier, Kunststoffe, Farben, Leder, Lacke, Bohr- und Schneidöle, Erdöl, Treibstoffe, Schmierstoffe, Fette, Wachse, Textilien, Leder, Gläser, Gummi oder Klebstoffe handelt.

**18.** Materialien nach Anspruch 17, dadurch gekennzeichnet, dass es sich dabei um Holz, Gegenstände aus

Polyvinylchlorid oder Dispersions- oder Antifoulingfarben handelt.

**19.** Materialien nach Anspruch 15, dadurch gekennzeichnet, dass es sich dabei um Schwimmbecken, Industrieteiche oder industrielle Wasserkreisläufe, insbesondere um Kühl- oder Prozesswasser, vorzugsweise um Kühlwasser in Kraftwerken, chemischen Anlagen, Stahl- oder Papierfabriken, in Brauereien, Schiffen oder Meerwassermaschinen handelt.

**20.** Materialien und Systeme nach Anspruch 16, dadurch gekennzeichnet, dass sie mindestens ein weiteres Biocid enthalten.

**21.** 3,5-Dihalogeno-1,2,6-thiadiazin-4-one der Formel

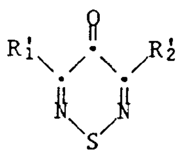

(IA),

worin $R_1'$ und $R_2'$ unabhängig voneinander Chlor, Fluor oder Brom, jedoch nicht beide gleichzeitig Chlor bedeuten.

**Patentansprüche für folgenden Vertragsstaat : ES**

**1.** Verwendung von 3,5-Dihalogeno-1,2,6-thiadiazin-4-onen der Formel

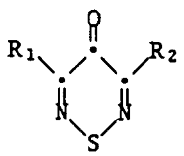

(I),

worin $R_1$ und $R_2$ unabhängig voneinander Chlor, Fluor oder Brom bedeuten, als Biozide in technischen Materialien und in Wassersystemen.

**2.** Verwendung nach Anspruch 1 von 3,5-Dichlor-1,2,6-thiadiazin-4-on.

**3.** Verwendung nach Anspruch 1 oder 2 zum Schutz von Holz, Zellstoff, Papier, Kunststoffen, Farben, Leder, Lacken, Bohr- und Schneidölen, Erdöl, Treibstoffen, Schmierstoffen, Fetten und Wachsen, Textilien, Leder, Gläsern, Gummi und Klebstoffen und von industriellen Wasserkreisläufen.

**4.** Verwendung nach Anspruch 3 zum Schützen von Holz, Kunststoffen, Farben und Lacken und industriellen Wasserkreisläufen.

**5.** Verwendung nach Anspruch 4 zum Schützen von Holz, Gegenständen aus Polyvinylchlorid und von Dispersions- oder Antifoulingfarben.

**6.** Verwendung nach Anspruch 1 oder 2, worin das Wassersystem ein industrieller Wasserkreislauf, ein Schwimmbecken oder ein Industrieteich ist.

**7.** Verwendung nach Anspruch 1 oder 2, worin das Wassersystem ein Kühl- oder Prozesswasser ist.

**8.** Verwendung nach Anspruch 7, worin das Wassersystem Kühlwasser in Kraftwerken, chemischen Anlagen, Stahl- oder Papierfabriken, in Brauereien, Schiffen oder Meerwassermaschinen ist.

**9.** Verwendung nach Anspruch 1 oder 2, worin das Wassersystem Einpresswasser für Oelfelder ist.

**10.** Verwendung nach Anspruch 1 oder 2, worin das Wassersystem geothermisches Wasser, Wasser in Zentralheizungssystemen oder Klimaanlagen oder Wasser für hydrostatische Untersuchungen ist.

11. Verwendung nach Anspruch 1 zum Desinfizieren von Oberflächen.

12. Verfahren zum Schützen vor dem Befall durch Schadorganismen von technischen Materialien und Wassersystemen oder zur Bekämpfung derselben auf oder in technischen Materialien und Wassersystemen, dadurch gekennzeichnet, dass man besagten Materialien bzw. Systemen ein 3,5-Dihalogeno-1,2,6-thiadiazin-4-on der in Anspruch 1 angegebenen Formel I, insbesondere 3,5-Dichlor-1,2,6-thiadiazin-4-on, einverleibt bzw. auf diese aufbringt.

13. Verfahren nach Anspruch 12, worin die technischen Materialien bzw. die Wassersysteme Holz, Zellstoff, Papier, Kunststoffe, Farben, Lacke, Bohr- und Schneidöle, Erdöl, Treibstoffe, Schmierstoffe, Fette und Wachse, Textilien, Leder, Gläser, Gummi und Klebstoffe und industrielle Wasserkreisläufe sind.

14. Verfahren nach Anspruch 12 oder 13, worin das Thiadiazinon in einer Menge von 0,0001 bis 40, insbesondere 0,01 bis 10 Gew.-%, bezogen auf die technischen Materialien bzw. Wassersysteme, eingesetzt wird.

15. Verfahren nach Anspruch 12, worin mindestens ein weiteres Biocid zugesetzt wird.

16. Technische Materialien und Wassersysteme, enthaltend als Biocid ein 3,5-Dihalogeno-1,2,6-thiadiazin-4-on der Formel I, insbesondere 3,5-Dichlor-1,2,6-thiadiazin-4-on.

17. Materialien nach Anspruch 16, dadurch gekennzeichnet, dass es sich dabei um Holz, Zellstoff, Papier, Kunststoffe, Farben, Leder, Lacke, Bohr- und Schneidöle, Erdöl, Treibstoffe, Schmierstoffe, Fette, Wachse, Textilien, Leder, Gläser, Gummi oder Klebstoffe handelt.

18. Materialien nach Anspruch 17, dadurch gekennzeichnet, dass es sich dabei um Holz, Gegenstände aus Polyvinylchlorid oder Dispersions- oder Antifoulingfarben handelt.

19. Materialien nach Anspruch 15, dadurch gekennzeichnet, dass es sich dabei um Schwimmbecken, Industrieteiche oder industrielle Wasserkreisläufe, insbesondere um Kühl- oder Prozesswasser, vorzugsweise um Kühlwasser in Kraftwerken, chemischen Anlagen, Stahl- oder Papierfabriken, in Brauereien, Schiffen oder Meerwassermaschinen handelt.

20. Materialien und Systeme nach Anspruch 16, dadurch gekennzeichnet, dass sie mindestens ein weiteres Biocid enthalten.

## Claims

### Claims for the following Contracting States : BE, CH, DE, FR, GB, IT, LI, NL, SE

1. The use of a 3,5-dihalogeno-1,2,6-thiadiazin-4-one of the formula

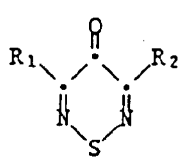

(I)

in which $R_1$ and $R_2$ independently of one another are chlorine, fluorine or bromine, as a biocide in industrial materials and in water systems.

2. Use according to claim 1 of 3,5-dichloro-1,2,6-thiadiazin-4-one.

3. Use according to claim 1 or 2 for the protection of wood, cellulose, paper, plastics, paints, lacquers, drilling and cutting oils, petroleum, motor fuels, lubricants, fats and waxes, textiles, leather, glass, rubber and adhesives, and of industrial water circulation systems.

4. Use according to claim 3 for protecting wood, plastics, paints and lacquers and industrial water circulation systems.

5. Use according to claim 4 for protecting wood, articles made of polyvinyl chloride and emulsion or anti-fouling paints.

6. Use according to claim 1 or 2, wherein the water system is an industrial water circulation system, a swimming pool or an industrial pond.

7. Use according to claim 1 or 2, wherein the water system is cooling water or process water.

8. Use according to claim 7, wherein the water system is cooling water in power stations, chemical plants, steel or paper factories, breweries, ships or seawater machinery.

9. Use according to claim 1 or 2, wherein the water system is injection water for oil fields.

10. Use according to claim 1 or 2, wherein the water system is geothermal water, water in central heating systems or air-conditioning systems or water for hydrostatic tests.

11. Use according to claim 1 for disinfecting surfaces.

12. A process for protecting industrial materials and water systems from attack by harmful organisms or for controlling the latter on or in industrial materials and water systems, which comprises incorporating in or applying to the said materials or systems a 3,5-dihalogeno-1,2,6-thiadiazin-4-one of the formula I indicated in claim 1, in particular 3,5-dichloro-1,2,6-thiadiazin-4-one.

13. A process according to claim 12, wherein the industrial materials or the water systems are wood, cellulose, paper, plastics, paints, lacquers, drilling and cutting oils, petroleum, motor fuels, lubricants, fats and waxes, textiles, leather, glass, rubber and adhesives and industrial water circulation systems.

14. A process according to claim 12 or 13, wherein the thiadiazinone is employed in an amount of 0.0001 to 40, in particular 0.01 to 10, % by weight, relative to the industrial materials or water systems.

15. A process according to claim 12, wherein at least one further biocide is added.

16. An industrial material or a water system containing, as the biocide, a 3,5-dihalogeno-1,2,6-thiadiazin-4-one of the formula I, in particular 3,5-dichloro-1,2,6-thiadiazin-4-one.

17. A material according to claim 16, wherein the material is wood, cellulose, paper, plastics, paints, lacquers, drilling and cutting oils, petroleum, motor fuels, lubricants, fats, waxes, textiles, leather, glass, rubber or adhesives.

18. A material according to claim 17, wherein the material is wood, articles made of polyvinyl chloride or emulsion or anti-fouling paints.

19. A material according to claim 15, wherein the material is swimming pools, industrial ponds or industrial water circulation systems, in particular cooling water or process water, preferably cooling water in power stations, chemical plants, steel or paper factories, breweries, ships or seawater machinery.

20. A material or a system according to claim 16, which contains at least one further biocide.

21. A 3,5-dihalogeno-1,2,6-thiadiazin-4-one of the formula

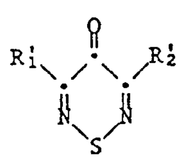

(IA)

in which $R_1'$ and $R_2'$ independently of one another are chlorine, fluorine or bromine, but are not both chlorine at the same time.

**Claims for the following Contracting State : ES**

1. The use of a 3,5-dihalogeno-1,2,6-thiadiazin-4-one of the formula

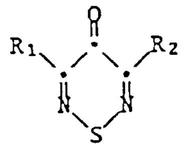

(I)

in which $R_1$ and $R_2$ independently of one another are chlorine, fluorine or bromine, as a biocide in industrial materials and in water systems.

2. Use according to claim 1 of 3,5-dichloro-1,2,6-thiadiazin-4-one.

3. Use according to claim 1 or 2 for the protection of wood, cellulose, paper, plastics, paints, lacquers, drilling and cutting oils, petroleum, motor fuels, lubricants, fats and waxes, textiles, leather, glass, rubber and adhesives, and of industrial water circulation systems.

4. Use according to claim 3 for protecting wood, plastics, paints and lacquers and industrial water circulation systems.

5. Use according to claim 4 for protecting wood, articles made of polyvinyl chloride and emulsion or antifouling paints.

6. Use according to claim 1 or 2, wherein the water system is an industrial water circulation system, a swimming pool or an industrial pond.

7. Use according to claim 1 or 2, wherein the water system is cooling water or process water.

8. Use according to claim 7, wherein the water system is cooling water in power stations, chemical plants, steel or paper factories, breweries, ships or seawater machinery.

9. Use according to claim 1 or 2, wherein the water system is injection water for oil fields.

10. Use according to claim 1 or 2, wherein the water system is geothermal water, water in central heating systems or air-conditioning systems or water for hydrostatic tests.

11. Use according to claim 1 for disinfecting surfaces.

12. A process for protecting industrial materials and water systems from attack by harmful organisms or for controlling the latter on or in industrial materials and water systems, which comprises incorporating in or applying to the said materials or systems a 3,5-dihalogeno-1,2,6-thiadiazin-4-one of the formula I indicated in claim 1, in particular 3,5-dichloro-1,2,6-thiadiazin-4-one.

13. A process according to claim 12, wherein the industrial materials or the water systems are wood, cellulose, paper, plastics, paints, lacquers, drilling and cutting oils, petroleum, motor fuels, lubricants, fats and waxes, textiles, leather, glass, rubber and adhesives and industrial water circulation systems.

14. A process according to claim 12 or 13, wherein the thiadiazinone is employed in an amount of 0.0001 to 40, in particular 0.01 to 10, % by weight, relative to the industrial materials or water systems.

15. A process according to claim 12, wherein at least one further biocide is added.

16. An industrial material or a water system containing, as the biocide, a 3,5-dihalogeno-1,2,6-thiadiazin-4-one of the formula I, in particular 3,5-dichloro-1,2,6-thiadiazin-4-one.

17. A material according to claim 16, wherein the material is wood, cellulose, paper, plastics, paints, lacquers, drilling and cutting oils, petroleum, motor fuels, lubricants, fats, waxes, textiles, leather, glass, rubber or adhesives.

18. A material according to claim 17, wherein the material is wood, articles made of polyvinyl chloride or emulsion or anti-fouling paints.

19. A material according to claim 15, wherein the material is swimming pools, industrial ponds or industrial water circulation systems, in particular cooling water or process water, preferably cooling water in power stations, chemical plants, steel or paper factories, breweries, ships or seawater machinery.

20. A material or a system according to claim 16, which contains at least one further biocide.

## Revendications

**Revendications pour les Etats contractants suivants : BE, CH, DE, FR, GB, IT, LI, NL, SE**

1. Emploi de 3,5-dihalogéno-1,2,6-thiadiazin-4-ones de formule I ci-dessous :

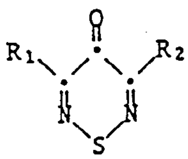

(I)

dans laquelle $R_1$ et $R_2$ désignent chacun, indépendamment l'un de l'autre, le chlore, le fluor ou le brome, comme agents biocides pour matériaux industriels et milieux, systèmes et appareils à eau.

2. Emploi selon la revendication 1 de la 3,5-dichloro-1,2,6-thiadiazin-4-one.

3. Emploi selon la revendication 1 ou 2 pour protéger du bois, de la cellulose, du papier, des matières plastiques, peintures et encres, cuirs, vernis, huiles de forage et de coupe, pétroles, carburants, lubrifiants, matières grasses et cires, textiles, verres, caoutchoucs et adhésifs, ainsi que des circuits d'eau industriels.

4. Emploi selon la revendication 3 pour protéger du bois, des matières plastiques, des peintures ou encres et des vernis ainsi que des circuits d'eau industriels.

5. Emploi selon la revendication 4 pour protéger du bois, des objets en polychlorure de vinyle et des peintures-dispersions ou des peintures anti-salissures.

6. Emploi selon la revendication 1 ou 2 dans lequel le système à eau est un circuit d'eau industriel, une piscine ou un bassin industriel.

7. Emploi selon la revendication 1 ou 2 dans lequel le système à eau est une eau de refroidissement ou de traitement.

8. Emploi selon la revendication 7 dans lequel le système à eau est une eau de refroidissement pour centrales électriques, usines chimiques, fabriques d'acier ou de papier, brasseries, navires ou appareils à eau de mer.

9. Emploi selon la revendication 1 ou 2 dans lequel il s'agit d'eau à injecter sous pression dans un champ pétrolifère.

10. Emploi selon la revendication 1 ou 2 dans lequel il s'agit une eau chaude souterraine (eau géothermique), d'une eau de chauffage central ou de climatisation ou encore d'une eau pour des études hydrostatiques.

11. Emploi selon la revendication 1 pour la désinfection de surfaces.

12. Procédé de protection contre l'attaque par des organismes nuisibles de matériaux industriels et de systèmes à eau, ou de lutte contre ces organismes sur ou dans des matériaux industriels ou des systèmes à eau, procédé caractérisé en ce que l'on incorpore ou on applique à ces matériaux ou systèmes une 3,5-dihalogéno-1,2,6-thiadiazin-4-one de formule I définie à la revendication 1, en particulier la 3,5-dichloro-1,2,6-thiadiazin-4-one.

13. Procédé selon la revendication 12 dans lequel les matériaux industriels ou les systèmes à eau sont du bois, de la cellulose, du papier, des matières plastiques, peintures, encres ou vernis, huiles de forage et de coupe, pétroles, carburants , lubrifiants, matières grasses et cires, textiles, cuirs, verres, caoutchoucs et adhésifs, ou des circuits d'eau industriels.

14. Procédé selon la revendication 12 ou 13 dans lequel on utilise la thiadiazinone dans une proportion de 0,0001 à 40 %, notamment de 0,01 à 10 %, du poids des matériaux ou des systèmes à eau.

15. Procédé selon la revendication 12 dans lequel on ajoute un ou plusieurs autres agents biocides.

16. Matériaux industriels et systèmes à eau contenant comme agent biocide une 3,5-dihalogéno-1,2,6-thiadiazin-4-one de formule I, en particulier la 3,5-dichloro-1,2,6-thiadiazin-4-one.

17. Matériaux selon la revendication 16, caractérisés en ce qu'il s'agit de bois, cellulose, papier, matières plastiques, peintures ou encres, cuirs, vernis, huiles de forage et de coupe, pétroles, carburants, lubrifiants, graisses et cires, textiles, cuirs, verres, caoutchoucs ou adhésifs.

18. Matériaux selon la revendication 17, caractérisés en ce qu'il s'agit de bois, d'articles ou objets en polychlorure de vinyle ou de peintures-dispersions ou anti-salissures (anti-fouling).

19. Systèmes à eau selon la revendication 16, caractérisés en ce qu'il s'agit de piscines, bassins industriels, ou circuits d'eau industriels, en particulier d'eau de refroidissement ou de traitement et de préférence d'eau de refroidissement dans des centrales électriques, usines chimiques, fabriques d'acier ou de papier, brasseries, navires ou appareils à eau de mer.

20. Matériaux et systèmes selon la revendication 16, caractérisés en ce qu'ils contiennent un ou plusieurs autres biocides.

21. Les 3,5-dihalogéno-1,2,6-thiadiazin-4-ones de formules IA

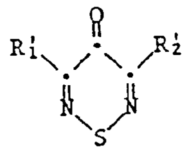

(IA)

dans laquelle $R_1'$ et $R_2'$ désignent chacun, indépendamment l'un de l'autre, le chlore, le fluor ou le brome mais pas les deux ensemble le chlore.

**Revendications pour l'Etat contractant suivant : ES**

1. Emploi de 3,5-dihalogéno-1,2,6-thiadiazin-4-ones de formule I ci-dessous :

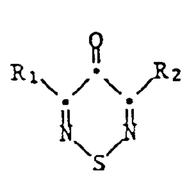

(I)

dans laquelle $R_1$ et $R_2$ désignent chacun, indépendamment l'un de l'autre, le chlore, le fluor ou le brome, comme agents biocides pour matériaux industriels et milieux, systèmes et appareils à eau.

2. Emploi selon la revendication 1 de la 3,5-dichloro-1,2,6-thiadiazin-4-one.

3. Emploi selon la revendication 1 ou 2 pour protéger du bois, de la cellulose, du papier, des matières plastiques, peintures et encres, cuirs, vernis, huiles de forage et de coupe, pétroles, carburants, lubrifiants, matières grasses et cires, textiles, verres, caoutchoucs et adhésifs, ainsi que des circuits d'eau industriels.

4. Emploi selon la revendication 3 pour protéger du bois, des matières plastiques, des peintures ou encres et des vernis ainsi que des circuits d'eau industriels.

5. Emploi selon la revendication 4 pour protéger du bois, des objets en polychlorure de vinyle et des peintures-dispersions ou des peintures anti-salissures.

6. Emploi selon la revendication 1 ou 2 dans lequel le système à eau est un circuit d'eau industriel, une piscine ou un bassin industriel.

7. Emploi selon la revendication 1 ou 2 dans lequel le système à eau est une eau de refroidissement ou de traitement.

8. Emploi selon la revendication 7 dans lequel le système à eau est une eau de refroidissement pour centrales électriques, usines chimiques, fabriques d'acier ou de papier, brasseries, navires ou appareils à eau de mer.

9. Emploi selon la revendication 1 ou 2 dans lequel il s'agit d'eau à injecter sous pression dans un champ pétrolifère.

10. Emploi selon la revendication 1 ou 2 dans lequel il s'agit d'une eau chaude souterraine (eau géothermique), d'une eau de chauffage central ou de climatisation ou encore d'une eau pour des études hydrostatiques.

11. Emploi selon la revendication 1 pour la désinfection de surfaces.

12. Procédé de protection contre l'attaque par des organismes nuisibles de matériaux industriels et de systèmes à eau, ou de lutte contre ces organismés sur ou dans des matériaux industriels ou des systèmes à eau, procédé caractérisé en ce que l'on incorpore ou on applique à ces matériaux ou systèmes une 3,5-dihalogéno-1,2,6-thiadiazin-4-one de formule I définie à la revendication 1, en particulier la 3,5-dichloro-1,2,6-thiadiazin-4-one.

13. Procédé selon la revendication 12 dans lequel les matériaux industriels ou les systèmes à eau sont du bois, de la cellulose, du papier, des matières plastiques, peintures, encres ou vernis, huiles de forage et de coupe, pétroles, carburants, lubrifiants, matières grasses et cires, textiles, cuirs, verres, caoutchoucs et adhésifs, ou des circuits d'eau industriels.

14. Procédé selon la revendication 12 ou 13 dans lequel on utilise la thiadiazinone dans une proportion de 0,0001 à 40 %, notamment de 0,01 à 10 %, du poids des matériaux ou des systèmes à eau.

15. Procédé selon la revendication 12 dans lequel on ajoute un ou plusieurs autres agents biocides.

16. Matériaux industriels et systèmes à eau contenant comme agent biocide une 3,5-dihalogéno-1,2,6-thiadiazin-4-one de formule I, en particulier la 3,5-dichloro-1,2,6-thiadiazin-4-one.

17. Matériaux selon la revendication 16, caractérisés en ce qu'il s'agit de bois, cellulose, papier, matières plastiques, peintures ou encres, cuirs, vernis, huiles de forage et de coupe, pétroles, carburants, lubrifiants, graisses et cires, textiles, cuirs, verres, caoutchoucs ou adhésifs.

18. Matériaux selon la revendication 17, caractérisés en ce qu'il s'agit de bois, d'articles ou objets en polychlorure de vinyle ou de peintures-dispersions ou anti-salissures (anti-fouling).

19. Systèmes à eau selon la revendication 16, caractérisés en ce qu'il s'agit de piscines, bassins industriels, ou circuits d'eau industriels, en particulier d'eau de refroidissement ou de traitement et de préférence d'eau de refroidissement dans des centrales électriques, usines chimiques, fabriques d'acier ou de papier, brasseries, navires ou appareils à eau de mer.

20. Matériaux et systèmes selon la revendication 16, caractérisés en ce qu'ils contiennent un ou plusieurs autres biocides.

Fig. 1

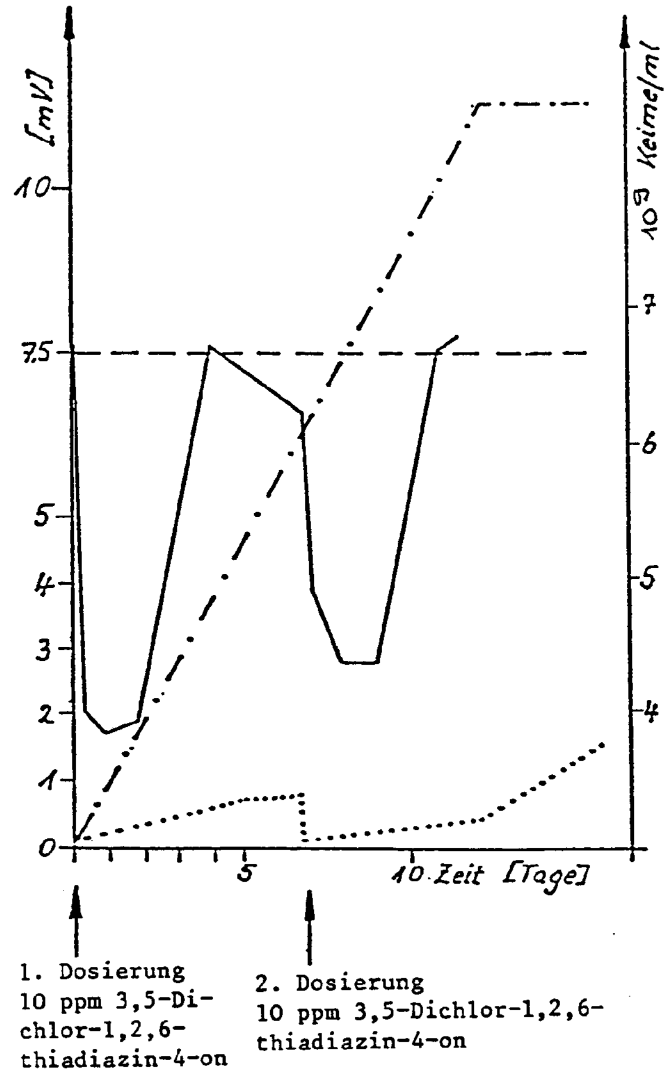


1. Dosierung 10 ppm 3,5-Dichlor-1,2,6-thiadiazin-4-on

2. Dosierung 10 ppm 3,5-Dichlor-1,2,6-thiadiazin-4-on

- – – – Keimzahlkontrolle
- ·–·–· ATP auf dem Zylinder, Kontrolle (ohne Zugabe der Prüfsubstanz)
- —— Keimzahl in mit der Prüfsubstanz behandeltem Wasser
- ······· ATP auf dem Zylinder, in mit der Prüfsubstanz behandeltem Wasser